(19) Europäisches Patentamt
European Patent Office
Office européen des brevets

(11) EP 2 263 990 B1

# (12) EUROPEAN PATENT SPECIFICATION

(45) Date of publication and mention of the grant of the patent:
**26.12.2012 Bulletin 2012/52**

(51) Int Cl.:
***C04B 28/02*** *(2006.01)*

(21) Application number: **10182329.2**

(22) Date of filing: **03.11.2006**

## (54) Liquid-repellent and stain-resistant cementitious product

Flüssigkeitsabweisendes und fleckenresistentes Zementprodukt

Produit cimenteux non mouillant et resistant aux taches

(84) Designated Contracting States:
**DE FR GB IT NL**

(43) Date of publication of application:
**22.12.2010 Bulletin 2010/51**

(62) Document number(s) of the earlier application(s) in accordance with Art. 76 EPC:
**06123465.4 / 1 935 861**

(73) Proprietor: **E. I. du Pont de Nemours and Company**
**Wilmington, DE 19898 (US)**

(72) Inventors:
- **Perdon, Matthieu**
  **78250, Hardricourt (FR)**
- **Pabon, Martial Jean-Jacques**
  **78980, Neauphlette (FR)**
- **Wysong, Ernest B.**
  **Hockessin, DE 19707 (US)**

(74) Representative: **Morf, Jan Stefan et al**
**Abitz & Partner**
**Patentanwälte**
**Hörselbergstrasse 5**
**81677 München (DE)**

(56) References cited:
**WO-A-93/01348** **DE-A1- 19 707 219**
**US-A- 5 990 212** **US-A1- 2004 087 709**

- **OHBAYASHI-GUMI, LTD.: "Surface treatment of concrete", CHEMICAL ABSTRACTS + INDEXES, AMERICAN CHEMICAL SOCIETY. COLUMBUS, US, vol. 108, no. 20, 16 May 1988 (1988-05-16) , XP000157466, Columbus, Ohio, US ISSN: 0009-2258**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### FIELD OF THE INVENTION

This invention relates to a composition comprising an anionic polyfluoro organic compound, an acrylic binder and a coalescent agent, and to a method of providing durable stain resistance, cleanability, wates repellency, and oil repellency to cement comprising contacting cement that is less than fully hydrated with the composition.

### BACKGROUND OF THE INVENTION

There are many different types of cement and they are used tor innumerable different applications. The type of cement that is produced in the greatest volume is PORTLAND cement used primarily in the building and construction industry and its uses take many different forms. PORTLAND cement is a hydraulic cement made by addition of water to the ground cement powder which hardens or cures by the reaction of water with its silicate and aluminate components.

In use the dry cement powder is mixed with water to form a paste. For many uses the cement/water paste is either used as is, or mixed with a small amount of silica sand. In most cases the water content is adjusted to give a heavy, mud-like consistency. This paste is cast into molds, or poured into previously prepared locations on the ground (such as walk-ways or driveways, or parts of building structures). The paste is then allowed to cure, set and harden.

This setting and hardening requires several days and involves a series of complex hydration processes that form new solid chemical silicate and aluminate species on a microscopic level. The result of the hardening process is a densely "knitted together" mass of silicate and aluminate particles in the form of grains connected by a network of needles. This microstructure gives the hardened cement its mechanical strength.

In many uses of cement it is important for the cement to have liquid repellency and stain resistance. US Patent 5,990,212 describes aqueous compositions for treating mineral materials to obtain water and oil repellency containing an organo-silicon compound, an organo fluorine compound, a surfactant, and water. US Patent 6,646,088 discloses a urethane-based composition as a coating for glass or ceramic substrates, such as cement, for providing stain release comprising repeating units of fluorine-containing urethane oligomers and long-chain hydrocarbon-containing urethane oligomers.

International patent application WO 93/01348 A discloses an aqueous composition, comprising a water-soluble or dispersible fluoroaliphatic radical-containing poly(oxyalkylene) compound, an anti-soiling agent and an organic solvent, for imparting water-and oil-repellency to concrete.

A high temperature cure is often required to impart good repellency properties to substrates using prior art compositions, which is usually not practical for cement substrates in the construction industry. Also durability of repellency and stain resistance properties in cement is typically poor. Thus there is a need for a cement composition and method of treatment of cement to provide improved repellency and stain resistance properties which are durable. Typically the surface treatment of cement substrates is conducted after the cement has set or hardened. There is also a need for a surface treatment agent that can be used immediately when the cement is made or poured into its final form prior to hardening. The present invention provides such compositions and method.

### SUMMARY OF THE INVENTION

The present invention provides a composition comprising an anionic polyfluoro organic compound, an acrylic binder and a coalescent agent, wherein the polyfluoro organic compound is (i) prepared by contacting: (1) at least one polyisocyanate, (2) at least one fluorocarbon alcohol, fluorocarbon thiol, or fluorocarbon amine, (3) at least one straight or branched chain alcohol, amine or thiol, (4) at least one alcohol containing a sulfonic acid group or its salt, and then (5) optionally with at least one linking agent, or wherein the polyfluoro organic compound is (,ï)

1) a mixture of mono(perfluoroalkyl) phosphate and bis(perfluoroalkyl) phosphate of Formula 1A,

$$[R_f\text{-}(O)_j]_x\text{-}P(O)\text{-}(O^-X^+)_{(3-x)} \qquad \text{Formula 1A}$$

wherein:

$R_f$ is selected from the group consisting of

$F(CF_2CF_2)_d(CH_2)_a$-,

$F(CF_2CF_2)_dCH_2CH_2(OCH_2CH_2)_b$-.

$F(CF_2CF_2)_d-$,

$F(CF_2CF_2)_dCH{=}CH(CH_2)_2-$, and

$C_8F_{17}SO_2N(R_5)CH_2CH_2-$;

a is from 2 to 10,
b is from 3 to 20,
c is from 2 to 20,
d is 1 to 8, or a mixture thereof,
$R_5$ is H or an aliphatic group containing 1 to 4 carbon atoms,
x is from 1 to 2,
j is 1 or 0, or a mixture thereof, and
X is hydrogen or M, and
M is an ammonium ion, an alkali metal ion, or an alkanolammonium ion, or

2) a phosphate of the structure of Formula IB

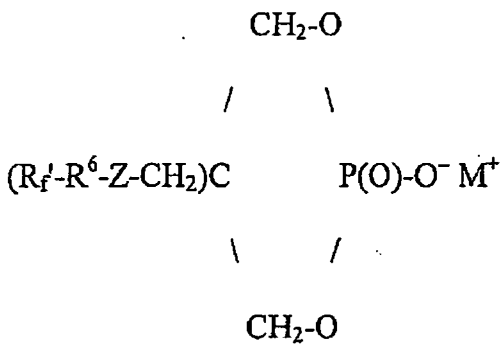

Formula 1B

wherein

$R_f'$ is a fluoroaliphatic group having a linear or branched perfluorocarbon chain having from 2 to 20 carbon atoms,
$R^6$ is an alkylene group having from 1 to 8 carbon atoms,
Z is -O-, -S-, or -NH-, and
M is as defined above in Formula IA, or

wherein the polyfluoro organic compound is (iii) a polymer having randomly distributed repeating units depicted in Formula 2

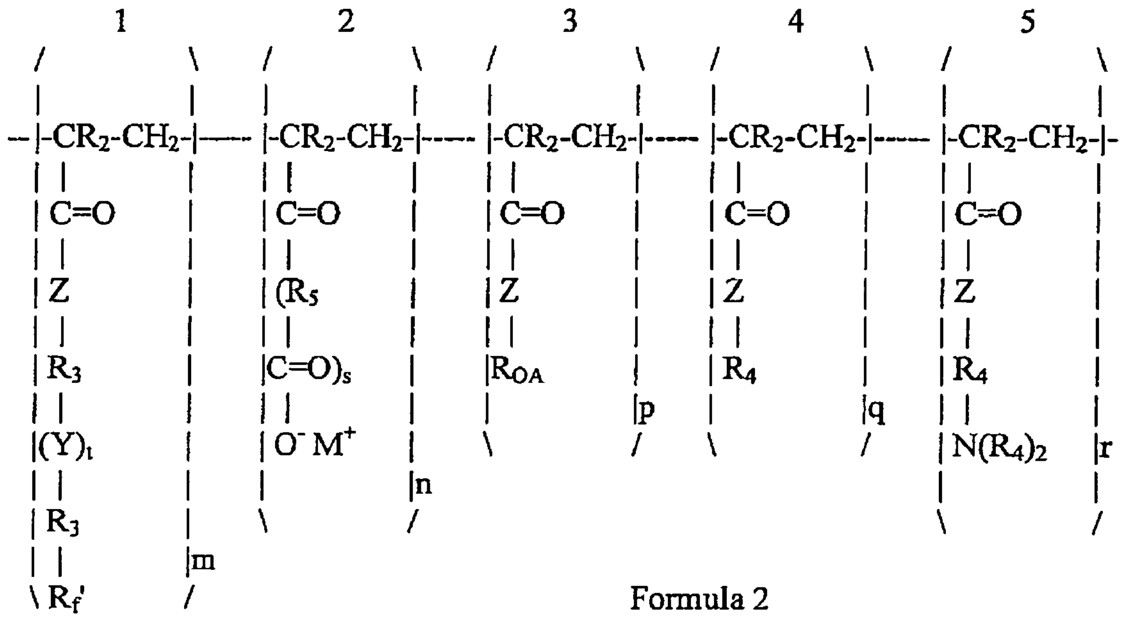

Formula 2

wherein

each $R_2$ is independently hydrogen or an aliphatic group having from 1 to 4 carbon atoms,
each $R_3$ is independently an alkylene group having from 1 to 8 carbon atoms,
each $R_4$ is independently an aliphatic group having from 1 to 20 carbon atoms,
each $R_5$ is independently a short chain alkylene group having from 1 to 4 carbon atoms,
$R_f'$ is a fluoroaliphatic group having a linear or branched perfluorocarbon chain having from 2 to 20 carbon atoms,
$R_{OA}$ is a group of the formula

$$-(C_2H_4O)_e(C_3H_6)_g(C_4H_8O)_hR_1.$$

wherein

$R_1$ is hydrogen or alkyl having 1 to 4 carbon atoms,
e is 0 to 20, and g and h are each individually zero or a positive integer, provided that the value of (e + g + h) is equal to or greater than 1,
each Z is independently -O-, -S-, or -NH-,
Y is $-N(R)SO_2-$ wherein R is H or an aliphatic group containing 1 to about 4 carbon atoms,
M is an ammonium ion, an alkali metal ion or an alkanolammonium ion,
s and t are each independently 0 or 1, and
m, n, p, q, and r are each integers such that m and n are each independently at least 1 and p, q, and r are each independently zero or a positive integer, or

wherein the polyfluoro organic compound is (iv) a fluoropolymer having interpolymerized units derived from A) polyfluoro acrylic monomers, B) non-fluorinated monomers, and optionally C) co-monomers, wherein

A) the polyfluoro acrylic monomers A are of formula (3A), (4A), or (5A) below

$$RF(CH_2)_p-SO_2N(R_1)-(CH_2)_q-OC(O)-C(R_2)=CH_2 \quad (3A)$$

$$RF-SO_2N(R_1)-(CH_2)_q-OC(O)-C(R_2)=CH_2 \quad (4A)$$

$$RF(CH_2)_p-OC(O)-C(R_2)-CH_2 \quad (5A)$$

wherein

$R_F$ is a perfluorinated radical with a linear or branched chain with 4 to 16 carbon atoms,

p and q are each independently integers ranging from 1 to 4,
$R_1$ is a linear or branched alkyl radical with 1 to 4 carbon atoms, and
$R_2$ is an hydrogen or a methyl;

B) the non-fluorinated monomer B) is an alkyl acrylate, alkyl methacrylate, glycol acrylate, glycol methacrylate, vinyl chloride, vinylidene chloride or vinyl acetate; and
C) optional co-monomer C is N,N dimethylaminoethyl or N, tert-butylaminoethyl acrylate or methacrylate, acrylic acid, methacrylic acid, and an acrylate or methacrylate monomer containing a sulfonic acid group or hydroxide group.

Furthermore, the present invention provides a method of providing durable stain resistance, cleanability, water repellency, and oil repellency to cement comprising contacting cement that is less than fully hydrated with a composition as defined above. Moreover, the present invention relates to the use of a composition as defined above for treating cement.
Preferred embodiments of the composition and method of the present invention are set forth in the appended claims.

DETAILED DESCRIPTION OF THE INVENTION

Trademarks are indicated herein by capitalization.
The term "cement" as used herein means all types of cement and concrete.
The term "fully hydrated" as used herein means that cement has completed the process of setting and hardening by completion of the hydration processes and reactions between the added water and the cement powder that form silicate and aluminate species within the structure of the cement.
The term "fresh cement" as used herein means cement that is less than fully hydrated. This includes cement that has been contacted with water, in particular sufficient water to achieve complete setting, optionally poured into a desired shape or form, and has not yet completely set or hardened, which typically requires at least 28 days, by means of the reactions between the water and the cement powder that form silicate and aluminate species within the structure of the cement. Thus, fresh cement preferably is a cement which has been contacted within the last 28 days with sufficient water to achieve complete setting.
Described herein is a cement that has been contacted, while in less than fully hydrated condition, with an aqueous anionic composition comprising a polyfluoro organic compound, an acrylic binder and a coalescent agent. Such contacting provides durable surface properties. The composition of this invention has special utility because the cement has durable stain resistance, water repellency, and oil repellency, and superior cleanability after setting when compared to cement that has been treated after it is fully hydrated. By treating the fresh cement, superior properties are obtained. The treated surface of the cement of the present invention also has high abrasion resistance and high durability to weathering.
The cement described herein provides the advantage that immediate treatment to provide surface properties is possible, with no waiting for the cement to set or cure. Thus no storage of the cement is required, or no later scheduling of a surface treatment is required. Another useful aspect of the invention is that the surface appearance of the cement is not changed significantly.
The cement described herein is prepared by first mixing water with any commercially available cement powder. A composition comprising an aqueous anionic polyfluoro organic compound, an acrylic binder and a coalescent agent is either mixed into the wet cement, or is applied to the surface of the cement after it is poured into the desired shape but before it is fully hydrated. A convenient way of practicing the invention is to apply an aqueous formulation of the composition comprising an anionic polyfluoro organic compound, an acrylic binder and a coalescent agent to the cement by commonly used techniques such as spraying, brushing, or with a roller or other applicator.
Fluorochemicals suitable for use as the polyfluoro organic compound in the composition of the present invention are fluorinated urethanes, fluoroalkylphosphates, and fluorinated acrylates or methacrylates as defined herein below. The polyfluoro organic compound is anionic in nature to obtain the desired surface effects. Many of these polyfluoro organic compounds are commercially available from E. I. du Pont de Nemours and Company, Wilmington, DE.
Fluorinated urethanes suitable for use as the polyfluoro organic compound in the present invention are prepared by contacting: (1) at least one polyisocyanate, (2) at least one fluorocarbon alcohol, fluorocarbon thiol, or fluorocarbon amine, (3) at least one straight or branched chain alcohol, amine or thiol, (4) at least one alcohol containing a sulfonic acid group or its salt, and then (5) optionally at least one linking agent.
Any polyisocyanate having predominately three or more isocyanate groups, or any isocyanate precursor of a polyisocyanate having predominately three or more isocyanate groups, is suitable for use herein. It is recognized that minor amounts of diisocyanates may remain in such products. An example of this is a biuret containing residual small amounts of hexamethylene diisocyanate. Particularly preferred are hexamethylene diisocyanate homopolymers. These

are commercially available, for instance as DESMODUR N-100 from Bayer Corporation, Pittsburgh PA. Also suitable for use as are hydrocarbon diisocyanate-derived isocyanurate trimers for example, DESMODUR N-3300 (a hexamethylene diisocyanate-based isocyanurate). Other triisocyanates useful for the purposes of this invention are those obtained by reacting three moles of toluene diisocyanate with 1,1,1-tris-(hydroxymethyl)ethane or 1, 1, 1-tris-(hydroxymethyl) propane. The isocyanurate trimer of toluene diisocyanate and that of 3-isocyanatomethyl-3,4,4-trimethylcyclohexyl isocyanate are other examples of triisocyanates useful for the purposes of this invention, as is methine-tris-(phenylisocyanate). Precursors of polyisocyanate, such as diisocyanate, are also suitable for use in the present invention as substrates for the polyisocyanates. Preferred polyisocyanate reactants are the aliphatic and aromatic polyisocyanates containing biuret structures. Most preferred is the homopolymer of hexamethylene diisocyanate, DESMODUR N-100.

The fluorocarbon alcohol, fluorocarbon thiol, or fluorocarbon amine reactant suitable for use in the present invention has the structure:

$R_f$ X-Y-H

wherein

$R_f$ is a $C_2$ to $C_{20}$ linear or branched fluorocarbon chain,
X is a divalent linking radical of formula $-(CH_2)_p-$ or $-SO_2N(R^1)CH_2CH_2-$, wherein p is 1 to 20; and $R^1$ is an alkyl of 1 to 4 carbon atoms; and
Y is -0-, -S-, or $-N(R^2)-$ where $R^2$ is H or $R^1$.

More particularly $R_f$ is $C_qF_{(2q+1)}$ wherein q is 4 to 20, or mixtures thereof. Preferred examples of RfX- include the following: 1) mixtures of $F(CF_2)_q(CH_2)_n-$ wherein q is as previously defined and n is 1 to 20, and 2) $F(CF_2)_qSO_2N(R^1)CH_2CH_2-$ wherein q and $R^1$ are as previously defined.

The alcohol, amine, or thiol reactant suitable for use herein is a straight chain or a branched alcohol, a straight chain or branched amine, or a straight chain or branched thiol. Primary alcohols are preferred since such alcohols are more readily reacted with the isocyanate groups than secondary or tertiary alcohols for steric reasons. Reactant 3 is a branched alcohol, amine, or thiol, or a mixture of branched and straight chain alcohols, amines, or thiols. Utilizing a proportion of branched chain alcohols, amines, or thiols provides a softer finish, probably by adding to the chain disorder. While the molar ratio of branched chain alcohol, amine, or thiol to straight chain alcohol, amine, or thiol is quiet broad, the molar ratio of branched chain to straight chain is preferably in the range 100:0 to 40:60.

Suitable branched chain alcohols, amines, or thiols have the structure $C_yH_{(2y+1)}-CH_2-OH$, $C_yH_{(2y+1)}-CH_2-NH_2$, or $CyH_{(2y+1)}-CH_2-SH$ wherein y is in the range 15 to 19, or mixtures thereof. An example is ISOFOL 18T, a mixture of branched chain alcohols comprising 2-hexyl- and 2-octyl-decanol, and 2-hexyl- and 2-octyl-dodecanol, available from Sasol, Johannesburg, South Africa. Optionally, ethoxylates of alcohols can be used.

The reactant comprising the alcohol containing a sulfonic acid group or its salt (Reactant 4) contributes anionic sites to the product polymer, such that the polymer has self-dispersing properties and forms stable aqueous dispersions without added surfactant. The alcohol-sulfonate salt has the structure

$MO_3$ S-Z-OH

wherein

M is an alkali metal; ammonium; alkyl, dialkyl, trialkyl, or tetraalkyl ammonium; or hydrogen; and
Z is a straight or branched chain alkyl group containing from 2 to 10 carbon atoms, or an aryl or alkylaryl group containing one or more aromatic rings and 6 to 11 carbon atoms. Preferred is sodium 2-hydroxyethyl sulfonate, commercially available under the trivial name sodium isethionate. Other examples of such hydroxysulfonic acids are ammonium isethionate, 3-hydroxy-1-propanesulfonic acid and its sodium salt, 4-hydroxybenzene sulfonic acid and its sodium salt, sodium 4-hydroxy-1-naphthalene sulfonate, and sodium 6-hydroxy-2-naphthalene sulfonate.

The alcohol containing a sulfonic acid group or its salt (Reactant 4) is not necessarily fully incorporated into the polyurethane. Thus the amount of the alcohol containing a sulfonic acid group or its salt may be slightly lower than the amount added and the amount of crosslinking by the linking reagent will be higher.

If reactants 1 to 4 are not present in sufficient quantities to consume all of the isocyanate groups, the remaining isocyanate groups are reacted with a multi-functional linking agent (Reactant 5), thereby linking two or more isocyanate-terminated molecules together and increasing the molecular weight of the product. Typically, a compound containing a hydroxy group is used as the linking agent. While water is the most commonly used linking agent, other multi-functional compounds such as glycols are also suitable for use herein. When a linking agent other than water is selected, a

stoichiometric insufficiency is used.

A suitable dry solvent free of groups that react with isocyanate groups is employed. Organic solvents are employed. Ketones are the preferred solvents, and methyl isobutyl ketone (MIBK) is particularly preferred for convenience and availability. A small proportion of a solubilizing aid such as dimethylformamide, dimethylacetamide, or N-methylpyrrolidone (e.g., 10% of the solvent) increases the solubility of the sodium hydroxysulfonate and is optionally used if incorporation of the hydroxysulfonate is too slow or is incomplete. The reaction of the alcohols with the polyisocyanate is optionally carried out in the presence of a catalyst, such as dibutyltindilaurate or tetraisopropyltitanate, typically in an amount of 0.1 - 1.0%. A preferred catalyst is dibutyltindilaurate.

Further details on the preparation of the fluorinated urethanes used herein are in US Patent 6,479,612.

Fluoroalkylphosphates suitable for use as the polyfluoro organic compound in the composition of the present invention include various phosphate salts. Preferred is the ammonium, alkali metal, or dialkanolammonium salt of a fluoroalkyl phosphate, or the ammonium, alkali metal, or dialkanolammonium salt of a fluoroalkyl phosphate ester. Preferably the salt comprises 1) a mixture of mono(perfluoroalkyl) phosphate and bis(perfluoroalkyl) phosphate of Formula 1A,

$$[R_f\text{-}(O)_j]_x\text{-}P(O)\text{-}(O^-X^+)_{(3-x)} \qquad \text{Formula 1A}$$

wherein:

$R_f$ is selected from the group consisting of

$F(CF_2CF_2)_d(CH_2)_a$-,

$F(CF_2CF_2)_dCH_2CH_2(OCH_2CH_2)_b$-,

$F(CF_2CF_2)_d$-,

$F(CF_2CF_2)_dCH{=}CH(CH_2)_c$-, and

$C_8F_{17}SO_2N(R_5)CH_2CH_2$-;

a is from 2 to 10,

b is from 3 to 20,

c is from 2 to 20,

d is 1 to 8, or a mixture thereof,

$R_5$ is H or an aliphatic group containing 1 to 4 carbon atoms,

x is from 1 to 2,

j is 1 or 0, or a mixture thereof, and

X is hydrogen or M, and

M is an ammonium ion, an alkali metal ion, or an alkanolammonium ion, or

2) a phosphate of the structure of Formula IB

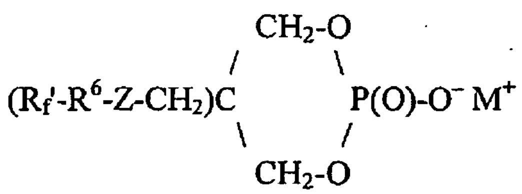

Formula 1B

wherein

$R_f$' is a fluoroaliphatic group having a linear or branched perfluorocarbon chain having from 2 to 20 carbon atoms,
$R^6$ is an alkylene group having from 1 to 8 carbon atoms,
Z is -O-, -S-, or -NH-, and
M is as defined above in Formula IA.

The fluoroalkyl phosphate is a mixture of mono(perfluoroalkyl) phosphate and bis(perfluoroalkyl) phosphate of the structure of Formula 1A or a phosphate of the structure of Formula 1B. Formula 1A typically contains ranges of 20 mole % bis(perfluoroalkyl) phosphate and 80 mole % mono(perfluoroalkyl) phosphate to up to 85 mole % bis(perfluoroalkyl) phosphate and 15 mole % of mono(perfluoroalkyl) phosphate. Alternatively, Formula 1A is a mixture of perfluorinated phosophonic and phosphinic acids or their corresponding salts.

The fluoroalkylphosphates are prepared according to the method described in US Patent 3,083,224 and US Patent 6,271,289. Typically, either phosphorus pentoxide ($P_2O_5$) or phosphorus oxychloride ($POCl_3$) are reacted with the fluoroalcohols to give mixtures of the mono- and bis(perfluoroalkyl)phosphoric acids. Neutralization, using common bases such as ammonium or sodium hydroxides provides the corresponding phosphates. Reacting an excess of fluoroalcohol with $P_2O_5$ followed by neutralization provides an equimolar mixture of mono(perfluoroalkyl)phosphate and bis (perfluoroalkyl)phosphate. Higher ratios of bis(perfluoroalkyl)phosphate to mono(perfluoroalkyl)phosphate are obtained by using the method of Hayashi and Kawakami in US Patent 4,145,382. The salts of the fluoroalkylphosphates are preferred over the corresponding acids as outlined in US Patent 3,083,224 by reason of their increased water solubility.

Fluorinated acrylates or methacrylates suitable for use as the polyfluoro organic compound in the composition of the present invention include a water-soluble aqueous fluoropolymer comprising polymers having interpolymerized units derived from monomers in Monomer Groups 1 and 2 and optionally monomers in Monomer Groups 3, 4, and 5 as described below.

Monomer Group 1 comprises acrylates or alkylacrylates containing a pendant fluoroalkyl group, or mixtures thereof Examples of Group 1 monomers are:

$F(CF_2)_8CH_2CH_2OC(O)CH{=}CH_2$,

$F(CF_2)_8CH_2CH_2OC(O)C(CH_3){=}CH_2$,

$F(CF_2)_{10}CH_2CH_2OC(O)CH{=}CH_2$,

$F(CF_2)_{10}CH_2CH_2OC(O)C(CH_3){=}CH_2$,

$F(CF_2)_{12}CH_2CH_2OC(O)CH{=}CH_2$,

$F(CF_2)_{12}CH_2CH_2OC(O)C(CH_3){=}CH_2$,

$C_4F_9SO_2N(C_2H_5)CH_2CH_2OC(O)CH{=}CH_2$,

$C_4F_9SO_2N(C_2H_5)CH_2CH_2OC(O)C(CH_3){=}CH_2$,

$C_4F_9SO_2N(C_4H_9)CH_2CH_2OC(O)CH{=}CH_2$, and

$C_4F_9SO_2N(C_4H_9)CH_2CH_2OC(O)C(CH_3){=}CH_2$

Alternatively, fluorinated or perfluorinated polyethers can be used as depicted in Formula 2 below.

Monomer Group 2 comprises acrylic and alkylacrylic acids or mixtures thereof.

Optional Monomer Group 3 comprises monomers from the group consisting of acrylate, methacrylate, acrylamide, methacrylamide, thioacrylate, or meththioacrylate compounds that contain an oxyalkylene or polyoxyalkylene group, or mixtures thereof. The oxyalkylene or polyoxyalkylene monomer of Monomer group 3, shown as $R_{OA}$ in Formula 2 below, is a group of the formula

$$-(C_2H_4O)_eC_3H_6O)_gC_4H_8O)_hR_1$$

wherein

$R_1$ is hydrogen or alkyl having 1 to 4 carbon atoms,
e is 0 to 20, and g and h are each individually zero or a positive integer, provided that the value of (e + g + h) is equal to or greater than 1, and preferably is equal to or greater than 1 to 20, to ensure the polymeric product is water-soluble or water-dispersible. Preferably, $R_{OA}$ contains a polyoxyethylene chain or a polyoxyalkylene chain consisting of interpolymerized oxyethylene and oxypropylene units.

Examples of Group 3 monomers are:

$HOCH_2CH_2OC(O)CH{=}CH_2$, having e = 1 and g = h = 0;

$HO(CH_2CH_2O)_7C(O)C(CH_3){=}CH_2$, having e = 7 and g = h = 0;

$HO(C_3H_6O)_7C(O)C(CH_3){=}CH_2$, having e = h = 0 and g = 7;

and

$CH_3O(CH_2CH_2O)_{14}C(O)C(CH_3){=}CH_2$ having e = 14 and g = h = 0.

Optional Monomer Group 4 comprises alkyl acrylates, and N-alkylacrylamides, or a mixture thereof. Examples of Group 4 monomers are:

$CH_3OC(O)CH{=}CH_2$,

$CH_3OC(O)C(CH_3)CH_2$,

$C_2H_5OC(O)CH{=}CH_2$,

$C_4H_9OC(O)CH{=}CH_2$,

and

$C_4H_9OC(O)C(CH_3){=}CH_2$.

Optional Monomer Group 5 comprises a dialkylaminoalkyl acrylate, such as 2-diethylaminoethyl methacrylate.

The fluoroacrylate has the structure of Formula 2 below, wherein the numbers 1 to 5 at the top designate the repeating units from the monomers described above. Formula 2 is schematic and the actual fluoropolymer can have a substantially random distribution of the repeating units or can have a block copolymer structure.

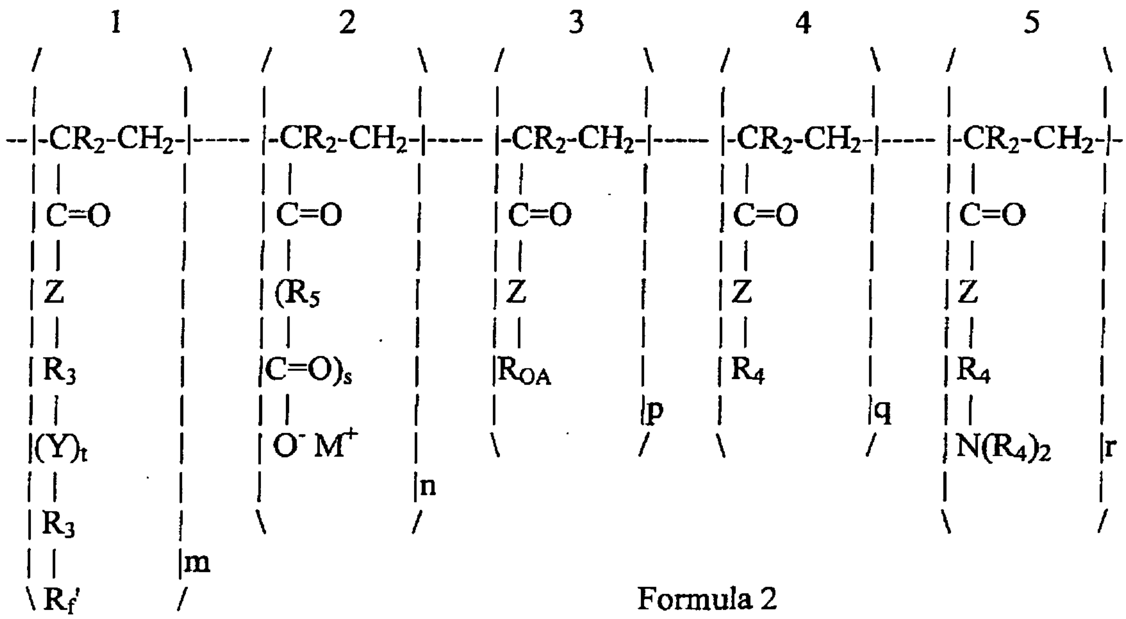

Formula 2

wherein:

each $R_2$ is independently hydrogen or an aliphatic group having from 1 to 4 carbon atoms, and is preferably H or methyl,
each $R_3$ is independently an alkylene group having from 1 to 8 carbon atoms, and is preferably ethylene,
each $R_4$ is independently an aliphatic group having from 1 to 20 carbon atoms, and is preferably 1 to 4 carbon atoms,
each $R_5$ is independently a short chain alkylene group having from 1 to 4 carbon atoms, and is preferably methylene or ethylene,
$R_f$' is a fluoroaliphatic group having a linear or branched perfluorocarbon chain having from 2 to 20 carbon atoms,
$R_{OA}$ is a group of the formula

$$-(C_2H_4O)_e(C_3H_6O)_g(C_4H_8O)_hR_1$$

wherein

$R_1$ is hydrogen or alkyl having 1 to 4 carbon atoms,
e is 0 to 20, and g and h are each individually zero or a positive integer, provided that the value of (e + g + h) is equal to or greater than 1, and preferably is equal to or greater than 1 to 20,
each Z is independently -O-, -S-, or -NH-,
Y is $-N(R)SO_2-$ wherein R is as described above for Formula 1,
M is as defined above in Formula 1,
s and t are each independently 0 or 1,
m, n, p, q, and r are each integers such that m and n are each independently at least 1, and p, q, and r are each independently zero or a positive integer. Preferably the ratio of m:n is from 1:2 to 1:6, the ratio of m:p is 1:0.5 to 1:0, the ratio of m:q is 1:1 to 1:0, and the ratio of m:r is 1:0.1 to 1:0.

The number average molecular weight of the polymer is between 1,000 and 50,000. The polymers were prepared by standard polymerization techniques. Monomers are typically dissolved in an organic solvent such as 4-methyl-2-pentanone or in a mixture of organic solvents containing little or no water. Polymerization is initiated using from 0.5 to 2% by weight of a standard free-radical initiator such as t-butylperoctoate, t-amyl peroxy 2-ethylhexanoate or 2,2-azobisisobutyronitrile. Optionally from 0.1 to 1% by weight of a standard chain transfer agent such as dodecylmercaptan may also be used. The use of a chain transfer agent in a solvent, such as tetrahydrofuran or cumene, which itself provides chain transfer properties, can also be used

Polydispersity are usually between the range of 1.1 and 3.0. After the polymerization is complete, the acidic polymer solution is neutralized using a basic water solution to form an emulsion. Typically ammonium hydroxide is used. The amount of base necessary is calculated by assuming complete salt formation of all acid functionalities. Optionally 0 to 5 mole percent excess of base is added to insure conversion of all acid to salt. The final pH of the emulsion is between 6 and 9, and preferably is between 6 and 8. The bases suitable for the neutralization are alkali metal hydroxides, alkali metal carbonates, ammonium hydroxide or ethanolamines. Ammonium hydroxide solution is preferred. Further details of the preparation of such polymers are as described in US Patent 6,271,289.

Alternatively the fluorinated acrylates or methacrylates suitable for use as the polyfluoro organic compound in the composition of the present invention is a fluoropolymer having interpolymerized units derived from A) polyfluoro acrylic monomers, B) non-fluorinated monomers, and optionally C) co-monomers. The polyfluoro acrylic monomers A are of formula (3A), (4A), or (5A) below

$$RF(CH_2)_p-SO_2N(R_1)-(CH_2)_q-OC(O)-C(R_2)=CH_2 \quad (3A)$$

$$RF-SO_2N(R_1)-(CH_2)_q-OC(O)-C(R_2)=CH_2 \quad (4A)$$

$$RF(CH_2)p-CC(O)-C(R_2)-CH_2 \quad (5A)$$

wherein

$R_F$ is a perfluorinated radical with a linear or branched chain with 4 to 16 carbon atoms,
p and q are each independently integers ranging from 1 to 4,
$R_1$ is a linear or branched alkyl radical with 1 to 4 carbon atoms, and
$R_2$ is an hydrogen or a methyl.

The content in polyfluoro monomer A within the copolymer can vary from 40% to 90% by weight.

The non-fluorinated monomer B) is an alkyl acrylate, alkyl methacrylate, glycol acrylate, glycol methacrylate, or vinylic monomer. Examples include butyl methacrylate, ethyl-2 hexyl methacrylate, stearyl and behenyl acrylate or methacrylate, ethyl triglycol methacrylate, vinyl chloride, vinylidene chloride and vinyl acetate.

Optional co-monomers C are selected from N,N dimethylaminoethyl or N, tert-butylaminoethyl acrylate or methacrylate, acrylic acid, methacrylic acid, and an acrylate or methacrylate monomer containing a sulfonic acid group or hydroxide group. Examples of the latter are hydroxyethyl or hydroxypropyl acrylate or methacrylate.

Crosslinking agents can be used to link the copolymer to the substrate and make it non-soluble in solvents. Suitable crosslinking agents are acrylamide derivatives such as N-methylolacrylamide, N-methylolmethacrylamide, or chloro hydropropyl acrylate or methacrylate.

The fluoropolymer is prepared using known emulsion copolymerisation techniques conducted with anionic, non-ionic, or cationic surfactants. Molecular weights are adjusted with transfer agents such as mercaptans, or through the introduction technique of the different monomers. The copolymerisation can be initiated between 50 and 90°C with a peroxide type initiator or azo type initiator such as hydrogen peroxide or persulfates such as 4,4'azobis (cyano-4 pentanoic) or azo-bis(amidino propane). The solvent employed is an ether, preferably a propylene glycol ether, such as monoethoxypropanol, ethoxypropoanol, isobutoxypropanol, or methoxypropanol acetate. Preferred is methoxypropanol because it forms an azeotrope with water and thus can be distilled with water during drying to yield a dry polymeric non-sticking film. The quantity of ether (1) used can vary and is generally between 10 and 80 parts for 100 parts of monomers. Another advantage of use of ethers is that the ethers are used in a smaller quantity compared to regular solvents. The ratio of ether/water can vary from 1 to 5 and preferably from 1.5 to 5. The ethers enable obtaining emulsions with a high solid content without using a separate technology to generate the emulsion such as ultrasonic systems, homogenizers, and the like.

Acrylic binders suitable for use in the present invention include polymeric acrylic resins. The acrylic binders useful in the invention are primarily derived from polymers of ethlenically unsaturated monomers and include polymers of acrylates, methacrylates, or a mixture thereof. Preferred are polymers of $C_1$ to $C_4$ alkyl acrylates and $C_1$ to $C_4$ methacrylates with acrylic acid. Examples include methyl acrylate, butyl acrylate, methyl methacrylate, ethyl methacrylate, butyl methacrylate, hexyl methacrylate, and lauryl methacrylate. Copolymers or blends of two or more of these classes of monomers can be employed. Preferred are acrylate polymers or acrylate/acrylamide copolymers. The glass transition temperature for the polymer resin is in the range of -20 to 50C, preferably 0 to 40C. Such binders are prepared using conventional polymerization methods.

The polymeric binder can be from a latex emulsion or powder comprising a polymer polymerized from at least one or more of the following monomers: acrylic and methacrylic acid esters such as methyl(meth)acrylate, ethyl (meth) acrylate, butyl(meth)acrylate, 2-ethylhexy(meth)acrylate, decyl(meth)acrylate, lauryl(meth)acrylate, isobirnyl(meth)acrylate, isodecyl(meth)acrylate, oleyl(meth)acrylate, palmityl(meth)acrylate, steryl(meth)acrylate, hydroxyethyl(meth)acrylate, and hydroxypropyl(meth)acrylate; acid functional monomers such as acrylic acid, methacrylic acid, crotonic acid, fumaric acid and maleic acid; mono-methyl itaconate; mono-methyl fumarate; monobuytl fumarate; maleic anhydride; acryamide or substituted acrylamides; diacetone acryamide; gyycidyl methacrylate; acetoacetoxyethyl methacrylate; acrolein and methacrolein; dicyclopentadienyl methacrylate; dimethyl meta-isopropenyl benzyl isocyanate; isocyanato ethyl methacrylate; methyl cellulose; hydroxyethyl cellulose; styrene or substututed styrenes; butadiene; ethylene; vinyl acetate or other vinyl esters; vinyl monomers such as vinyl chloride, vinylidene chloride, N-vinyl pyrrolidone; ammonia monomers such as N,N'-dimethylamino (meth) acrylate and acrylonitrile or methacrylonitrile. Other suitable polymers and specific examples of commercially available polymers are disclosed in US Patent 4,229,224. Examples of commercially available products suitable for use in the present invention include ACRONAL S400 available from BASF AG, Ludwigshafen, Germany; Dow 460 available from Dow Chemical Company, Midland MI, USA; RHOPLEX E-330, RHOPLEX MC-76, and RHOPLEX E-3083 available from Rohm & Haas Company, Philadelphia, PA, USA; and UCAR Latex 417 and Latex 429 available from Union Carbide Corporation, Danbury, CT, USA. When used as a cementous slurry, the latex is generally stabilized by an anionic, cationic, or nonionic surfactant in a conventional manner, though the use of a surfactant can also require the use of a defoamer for mixing in the cement.

Coalescent agents suitable for use in the present invention include glycol ethers, ester alcohols, phosphate esters, and aromatic esters, or mixtures thereof. Preferred are agents that are slow to evaporate, have a large molecular size, and high polymer plasticizing efficiency. Such properties contribute to the coalescent agent being very efficient in water-borne latex systems. Especially suitable glycol ethers are butyl glycol ethers or alkylene substituted butyl glycol ethers, such as dipropylene glycol n-butyl ether. Particular ester alcohols include, for example, propanoic acid, 2-methyl-2,2-dimethyl-1-(1-methylethyl)-1,3-propanediyl ester. Examples of phosphate esters include tributoxyethylphosphate, alkyldiaryl phosphate ester, and triaryl phosphate ester. Particular aromatic esters include dibutylphthalate, dioctylphthalate, and dipropyleneglycol dibenzoate. Such coalescent agents are commercially available. Examples of such an agent include DOWANOL DPnB, DOWANOL DPM, each available from Dow Chemical Company, Midland MI, and TEXANOL and TXIB, each available from Eastman Chemical Company, Kingsport. TN. Other examples include SANTICIZER,

available from Ferro Corporation, Cleveland, OH, and REOFOS 50 available from Great Lakes Chemical Company, Indianapolis, IN.

The polyfluoro organic compound, acrylic binder and coalescent agent are added to the fresh cement separately or together. Preferably they are combined by mixing to prepare an aqueous solution, and the aqueous solution is added to or applied to the surface of the fresh cement. To prepare the aqueous solution mechanical stirring at ambient temperature and pressure is employed. The solution contains from 0.1 to 75 weight percent of the polyfluoro compound, from 0.5 to 75 weight percent of the acrylic binder, and from 1 to 25 weight percent of the coalescent agent. Preferably the solution contains from 1 to 30 weight percent of the polyfluoro compound, from 1 to 60 weight percent of the acrylic binder, and from 1 to 25 weight percent of the coalescent agent. More preferably the solution contain from 1 to 10 weight percent of the polyfluoro compound, from 5 to 50 weight percent of the acrylic binder, and from 1 to 25 weight percent of the coalescent agent. The total weight percent of the above components adds up to 100 weight percent.

The aqueous composition can optionally contain additional components including a biocide, UV absorber, wetting agent or rheology modifier. These can be used to optimize specific properties for a particular end use application. For example shelf stability can be optimized for situations where the product needs to be stored over long periods prior to use, or durability to weathering can be optimized for outdoor use. Optional ingredients can be present in an amount of from 1 to 25 weight percent, preferably from 1 to 10 weight percent. In all instances the total weight percent of all components in the solution add up to 100 weight percent.

In addition to the above described components, the cement composition of the present invention optionally further comprises a source of alkoxysilane. One embodiment of a suitable alkoxysilane is an alkylalkoxysilane having $C_1$ to $C_8$ alkyl groups on the silicon in a suitable carrier. Preferably the alkoxysilane is emulsified in water with a nonionic surfactant. The alkoxysilane can be combined with oligomers including higher molecular weight alkoxysilanes. A wide variety of silanes are commercially available for masonry treatment and one skilled in the art can easily employ such products in the present invention. See for example, US Patent 4,846,886 and 4,342,796. In addition, alkoxysilanes are often combined with siloxanes for use in treatment compositions, and such combinations are also suitable for use in the present invention. See for example, US Patents 4,753,977; 5,110,684; and 6,294,608. Examples of commercially available products include Wacker SILRES BS1001 available from Wacker Silicones, Munich, Germany; Dow Coming IE-6683 available from Dow Corning, Midland, MI; and BAYSILONE WA available from GE Bayer, Wilton, CT.

In one embodiment of an emulsion of organosilicon compounds and organosilane compounds wherein the organosilicon compounds are $C_1$ to $C_{20}$ hydrocarbon-$C_1$ to $C_6$ alkoxysilane, or branched organopolysiloxanes containing $C_1$ to $C_4$ alkoxy groups. Preferably the organosilicon compounds are $C_1$ to $C_6$ alkoxysilanes containing aminoalkyl groups, or branched organosiloxanes containing aminoalkyl groups. Such an emulsion is prepared as described in US Patent 6,294,608.

In another embodiment a water soluble coupling agent is combined with an emulsion of water, a surfactant, and a siloxane fluid. The siloxane fluid is a linear methylhydrogen siloxane, a methylhydrogen-methylalkyl siloxane copolymer, a methylhydrogen cyclosiloxane, or a methylhydrogen-methylalkyl cyclosiloxane copolymer. Such a combination is prepared as in US Patent 5,110,684.

Furthermore, there is described herein a method of providing durable stain resistance, water repellency, and oil repellency to cement comprising contacting the cement when it is less than fully hydrated with a composition comprising an anionic polyfluoro organic compound, an acrylic binder and a coalescent agent as described above.

The composition of an aqueous anionic polyfluoro organic compound, an acrylic binder and a coalescent agent is either mixed into the wet cement, or is applied to the surface of the cement after it is poured into the desired shape but before it is fully hydrated. Mixing the composition into the cement requires a larger amount of the composition. Therefore, it is preferred to apply the composition to the surface of the cement before it is fully hydrated. A convenient way of practicing the invention is to apply an aqueous formulation of the anionic polyfluoro organic compound, an acrylic binder and a coalescent agent to the surface of the cement by commonly used techniques such as spraying, brushing, or applying with a roller or other applicator after the cement is poured or shaped, but before it is fully hydrated.

Moreover, there is described herein a method of providing durable cleanability to cement comprising contacting the cement when it is less than fully hydrated with a composition comprising an anionic polyfluoro organic compound, an acrylic binder and a coalescent agent as described above. The contacting is as previously described. The resulting cured or set cement is easier to clean. Further the cleanability is durable over many scrubbings.

The composition and method of the present invention are useful to provide durable stain resistance, water repellency, and oil repellency to cement. Thus the cement can be cleaned or exposed to weather and the repellency and resistance remain effective.

Further these surface properties can be obtained by treating the fresh cement, without having to wait for the hydration process to be completed. The treatment is conducted at the time of mixing or pouring of the cement. Another advantage of the present invention is minimal modification of the surface compared to traditional treating agents including crosslinked resins. The composition of the present invention soaks into the treated substrate, and there is no glossy or wet appearance. The natural appearance of the substrate is maintained.

## MATERIALS AND TEST METHODS

The following materials and test methods were used in the Examples herein.

MATERIALS

1. Fluorochemical 1 was an anionic fluorinated urethane available from E. I. du Pont de Nemours and Company, Wilmington, DE, and was made by the following method. A flask was charged with 99.98 g of a solution of 62.7% by weight DESMODUR N-100 ( a hexamethylene diisocyanate prepolymer available from Bayer Corporation, Pittsburgh, PA) in methyl isobutyl ketone (MIBK),(calculated 320 mmol NCO); 14.68 g dimethylformamide; 1.94 g isethionic acid (13 mmol); 16.77 g stearyl alcohol (61mmol); 16.76 g ISOFOL 18T (61mmol) available from Sasol, Johannesburg, South Africa; and 57.68 g ZONYL BA (122 mmol, a mixed 1,1,2,2,-tetrahydroperfluoro-1-alkanols, predominately C8, C10, C12, and C 14 with small amounts of C6, C 16, and C 18, available from E. I. du Pont de Nemours and Company, Wilmington, DE). With stirring, this mass was heated to 48°C, and a solution of approximately 0.027 g dibutyltindilaurate in 1-2 mL of MIBK was added to the flask. The temperature of the reaction spontaneously rose to 76°C from the heat of reaction. The reaction mass was then further heated to 90°C, and maintained at that temperature for 21-22 hours. After the addition of 2.33 g of deionized water to consume the remaining isocyanate functional groups and 104.41 g of MIBK, the reaction mass was held at 75C for 3 hours. This initial product was then emulsified with 408.15 g of deionized water, and the MIBK and some of the water was removed by distillation to give 477 g of a dispersion product that was determined to be 29.9% solids.
2. Fluorochemical 2 was an anionic solution of mixed perfluoroalkylethyl phosphate diethanolamine salts 10-14% (1:1:2), 7-11% (2:1:1), 3-7% (1:1:1), in water, available from E. I. du Pont de Nemours and Company, Wilmington, DE, USA.
3. Fluorochemical 3 was an anionic solution of mixed perfluoroalkylethyl phosphate ammonium salts in water available from E. I. du Pont de Nemours and Company, Wilmington, DE, USA.
4. Acrylic Binder 1 was prepared as follows: To a 1-liter reactor containing 143 g of deionized water under a nitrogen atmosphere at 81°C. was added with stirring 2.8 g of sodium lauryl sulfate (28% active); 22.0 g of a monomer mixture consisting of (45.6% butyl acrylate/ 53.1% methylmethacrylate, 1.3% acrylic acid); 1.4 g of sodium carbonate dissolved in 8 g of deionized water; and 1 g of sodium persulfate dissolved in 5 g of deionized water. Then 340.0 g of a monomer mixture consisting of (45.6% butyl acrylate/ 53.1 % methylmethacrylate, 1.3 % acrylic acid), and a solution of 0.4 g of sodium persulfate dissolved in 18 g of deionized water were gradually added to the reaction mixture in the reactor over a 3 hour period. At the end of the polymerization after cooling to 60°C., 1.6 g of an aqueous solution of ferrous sulfate heptahydrate (0.15%), 0.3 g of t-butylhydroperoxide (70% active ingredient) in 4 g of deionized water, and 0.12 g of sodium sulfoxylate formaldehyde dihydrate in 7 g of deionized water were added. The reaction mixture was neutralized with ammonium hydroxide to a pH of 8.5. The reaction was then cooled to ambient temperature and filtered.

Test Method 1 - Water Repellency

The water repellency of a treated substrate was measured according to AATCC standard Test Method No. 193-2004 and the DuPont Technical Laboratory Method as outlined in the TEFLON Global Specifications and Quality Control Tests information packet, available from E. I. du Pont de Nemours and Company, Wilmington, DE.. The test determines the resistance of a treated substrate to wetting by aqueous liquids. Drops of water-alcohol mixtures of varying surface tensions are placed on the substrate and the extent of surface wetting is determined visually. The test provides a rough index of aqueous stain resistance. A higher water repellency rating indicates better resistance of a finished substrate to staining by water-based substances.

The water repellency test liquids are shown in Table 1.

Table 1 - Water Repellency Test Liquids

| Water Repellency Rating Number | Composition, Isopropyl Alcohol | Vol % Distilled Water |
|---|---|---|
| 1 | 2 | 98 |
| 2 | 5 | 95 |
| 3 | 10 | 90 |

(continued)

| Water Repellency Rating Number | Composition, Isopropyl Alcohol | Vol % Distilled Water |
|---|---|---|
| 4 | 20 | 80 |
| 5 | 30 | 70 |
| 6 | 40 | 60 |
| 7 | 50 | 50 |
| 8 | 60 | 40 |
| 9 | 70 | 30 |
| 10 | 80 | 20 |
| 11 | 90 | 10 |
| 12 | 100 | 0 |

Testing procedure: Three drops of Test Liquid 1 are placed on the treated substrate. After 10 seconds, the drops are removed by using vacuum aspiration. If no liquid penetration or partial absorption (appearance of a darker wet patch on the substrate) is observed, the test is repeated with Test Liquid 2. The test is repeated with Test Liquid 3 and progressively higher Test Liquid numbers until liquid penetration (appearance of a darker wet patch on the substrate) is observed. The test result is the highest Test Liquid number that does not penetrate into the substrate. Higher scores indicate greater repellency.

Test Method 2 - Oil Repellency

The treated samples were tested for oil repellency by a modification of AATCC standard Test Method No. 118, conducted as follows. A substrate treated with an aqueous dispersion of polymer as previously described, is conditioned for a minimum of 2 hours at 23°C and 20% relative humidity and 65°C and 10% relative humidity. A series of organic liquids, identified below in Table 2, are then applied dropwise to the samples. Beginning with the lowest numbered test liquid (Repellency Rating No. 1), one drop (approximately 5 mm in diameter or 0.05 mL volume) is placed on each of three locations at least 5 mm apart. The drops are observed for 30 seconds. If, at the end of this period, two of the three drops are still spherical in shape with no wicking around the drops, three drops of the next highest numbered liquid are placed on adjacent sites and similarly observed for 30 seconds. The procedure is continued until one of the test liquids results in two of the three drops failing to remain spherical to hemispherical, or wetting or wicking occurs.

The oil repellency rating is the highest numbered test liquid for which two of the three drops remained spherical to hemispherical, with no wicking for 30 seconds. In general, treated samples with a rating of 5 or more are considered good to excellent; samples having a rating of one or greater can be used in certain applications.

Table 2 - Oil Repellency Test Liquids

| Oil Repellency Rating Number | Test Solution |
|---|---|
| 1 | NUJOL Purified Mineral Oil |
| 2 | 65/35 NUJOL/n-hexadecane by volume at 21°C |
| 3 | n-hexadecane |
| 4 | n-tetradecane |
| 5 | n-dodecane |
| 6 | n-decane |
| 7 | n-octane |
| 8 | n-heptane |
| Note: NUJOL is a trademark of Plough, Inc., for a mineral oil having a Saybolt viscosity of 360/390 at 38°C and a specific gravity of 0.880/0.900 at 15°C. | |

Test Method 3 - Scrubbing Test

This test was used to expose the surface of the cement treated with the composition of this invention to abrasive action prior to stain resistance testing. This test simulates what frequently happens in normal use of cement objects, namely, that the objects are coated with protective coatings, then exposed to some abrasive use and later exposed to some common stains such as coffee or red wine. It indicates how well the composition of this invention resists / releases such stains after previously having been subjected to abrasive action.

The test consists of brushing the treated substrate with a machine using a detergent solution and a scrubbing brush. The detergent solution used was TEEPOL, available from JohnsonDiversey - 9-11, avenue du Val de Fontenay - 94133 - FONTENAY-SOUSBOIS- Cedex), at 6% by weight in tap water. After the scrubbing the detergent was rinsed out under tap water for 1 minute. The substrate was then dried for 24 hours, and Test Method 4 for stain resistance was conducted.

Table 3

| Number of Scrubs | Duration of Scrub | Quantity of detergent |
|---|---|---|
| 250 | 3 min 49sec | 12 ml |
| 500 | 7min 37sec | 20 ml |
| 1000 | 15min15sec | 15 ml (at 0'00") + 15 ml (at T37") |

Test Method 4 - Stain Resistance

Square tiles (12 in. square [30.5 $cm^2$]) of a sample cement substrate to be tested were cut into 4 in. square (10.2 $cm^2$) samples. After cutting the samples were rinsed to remove any dust or dirt and allowed to dry thoroughly, typically 3 days or more. Three tiles were used for each example, and the values averaged. Sample solutions to be tested were prepared and applied to the tiles as described in the Examples. After the treated samples dried overnight, three drops of deionized water were placed on each and allowed to sit for five minutes. The stains used for this test were:

| | |
|---|---|
| Coffee: | 100% pure cafe NESCAFE "SPECIAL FILTRE" NESTLE, hot, 50°C |
| Red Wine: | Grand vin de Bordeaux Vieilli en fit de chene |
| Cola: | Coca Cola |
| Blue Ink: | Cartouche Watermann bleu |
| Ketchup: | Tomato Ketchup HEINZ |
| Mustard: | Moutarde de Dijon "Fine et Forte" AMORA |
| Olive Oil: | Vierge extra LESIEUR |
| Solar Oil: | Soin bronzant, huile protectrice FPS2 Basse, a l'huile de |
| jojoba Mayonnaise: | NIVEA SUN Mayonnaise de Dijon AMORA |
| Used Motor Oil: | Diesel 20000 Km |

The stains were applied and remained in contact with the substrate samples for 4 hours. Then the stains were cleaned with a brush and a solution of TEEPOL available from JohnsonDiversey - 9-11, avenue du Val de Fontenay - 94133 - FONTENAY-SOUSBOIS- Cedex), at 6% in tap water, until no further modification of the stain was apparent (approximately 1 minute). The samples were then rinsed with tap water and allowed to dry for 24 hours before rating.

The stains remaining on the sample surfaces after cleaning were rated visually according to a scale of 0 to 4 as follows: 0 = no stain; 1 = very light stain slightly perceptible; 2 = light stain visible but outline cannot be defined; 3 = moderate stain clearly delimited but not very deep; 4 = heavy stain clearly delimited and very deep. The ratings for each substrate type are summed for each of the stains to give a composite rating for each type. Lower scores indicated better stain protection with scores of 20 or less being acceptable and with zero indicating the best protection with no stain present.

Finally, the "Easy to Clean Factor" (ECF) was calculated using the following formula:

$$ECF = 100 - [ER/(Rmax) \times (100)]$$

wherein

ER is the sum of the ratings, and
R max = heaviest stain rating possible (i.e., 10 x 4 = 40)

Test Method 5 - WEATHER O METER TEST

This test was used to expose cement samples to simulated extreme weather conditions. The stain resistance of each sample was measured initially, and after such exposure, using Test Method 4. A Weather 0 Meter, available from Atlas Material Testing Technology LLC, Chicago, IL, was employed, using the following conditions.

Parameters of Weather 0 Meter:

| | |
|---|---|
| Lamp - | Xenon 3500 WATT |
| Illumination - | 0.55 $W/m^2$ with 340 Nm |
| Temperature - | 70°C during the period without watering |
| Relative Humidity - | 50% $\pm$ 5% except during period of watering |
| Periodicity of watering - | 18 minutes of watering followed by 108 minutes without watering. |

Each sample was mounted in a frame and inserted into the Weather O Meter. The samples' dimensions for testing were 12 x 4.8 cm, with a thickness of 15 mm. The sample was subjected to repeated cycles of 18 minutes of a continuous water spray onto the sample surface followed by 108 minutes of heating via the lamp. The cycle was continuously repeated for a total of 500 hours. The number of stains used for stain testing, both initially and after exposure, was limited to 6 (coffee, red wine, blue ink, olive oil, sun oil, worn motor oil) per Test Method 4 above.

Test Method 6

This test was used to expose the cement samples to cold. The stain resistance was measured initially, and after exposure, using Test Method 4. The exposure consisted of storage for 500 hours at -20°C in a freezer. After storage in the freezer, the samples were maintained for 24 hours at ambient temperature before the second stain test was conducted.

**EXAMPLES**

Example 1

A solution was prepared by adding the following to 58.43 g of deionized water in the order listed with slight agitation: 1.75 g of TEXANOL ( a coalescent agent available from Dow Coming, Midland, MI, USA), 0.10 g of ZONYL FSN (a nonionic fluorosurfactant available from E. I. du Pont de Nemours and Company, Wilmington, DE, USA), 0.30 g of ACTICIDE MBS (a biocide available from Thor SARL, 325 rue des Balmes, F38150 Salaire-sur-Sanne, France), 0.30 g of ACTICIDE DT (a biocide available from Thor SARL at above location), 0.06 g of TINUVIN 1130 (a ultraviolet absorber available from Ciba Spezialitatenchemie AG, CH-4002, Basil, Switzerland), 0.06 g of TINUVIN 292 (a light stabilizer available from Ciba Spezialitatenchemie AC at above address), 1.5 g of BAYSILONE WA (a solvent free silicone aqueous emulsion containing 1-octyltriethoxysilane and ethoxy terminated silicone and polysiloxane polymers with silsesquioxanes having a pH of 9, available from GE Bayer, Wilton, CT , USA), 12.5 g of Fluorochemical 1, and 25.0 g of Acrylic Binder 1. The solution was applied to fresh cement by spraying in the amount indicated in Table 4, and tested in accordance with Test Methods 1 through 6. The fresh cement was a hydraulic cement of sand, gravel, cement powder, iron oxide, and water. The resulting data are in Table 4. The solution of Example 1 was also applied to the same cement after it was fully hydrated by spraying in the amount indicated in Table 4, and tested in accordance with Test Methods 1, 2, 3, and 4. The resulting data are in Table 4.

Example 2

A solution was prepared by adding the following to 576.47 g of deionized water in the order listed with slight agitation: 0.70 g of TEXANOL, 0.10 g of ZONYL FSN, 0.20 g of ACTICIDE MBS, 0.20 g of ACTICIDE DT, 0.04 g of TINUVIN 1130,0.04 g of TINUVIN 292, 1.00 g of BAYSILONE WA, 11.25 g of Fluorochemical 1, and 10.00 g of Acrylic Binder 1. Sources of these components were as in Example 1. The solution was applied to fresh concrete as used in

Example 1 by spraying in the amount indicated in Table 4, and tested in accordance with Test Methods 1 through 4. The resulting data are in Table 4.

Comparative Examples A

A commercially available cationic fluorochemical product ZONYL 329, available from E. I. du Pont de Nemours and Company, Wilmington, DE, was diluted in deionized water with agitation to prepare a solution containing 10% by weight of the fluorochemical, respectively. The solution was applied by spraying onto fully hydrated concrete as used in Example 1 in the amount indicated in Table 4, and tested in accordance with Test Methods 1, 2, 3 and 4. The results are listed in Table 4. The solution was also applied by spraying to fresh cement as used in Example 1 in the amount indicated in Table 4, and tested in accordance with Test Methods 1, 2 and 4. Results are in Table 4.

TABLE 4

| Example | Cement | Number of Scrubs | Water Repellency | Oil Repellency | Easy to Clean Factor (%) | Deposit Rate $g/m^2$ |
|---|---|---|---|---|---|---|
| Untreated | | | 0 | 0 | 0 | |
| | | | | | | |
| 1 | Fresh | Initial | 12 | 8 | 97 | 150 |
| | | 250 | 12 | 8 | 91 | 150 |
| | | 500 | 12 | 8 | 78 | 150 |
| | | 1000 | 12 | 8 | 91 | 150 |
| | | | | | | |
| 1 | Cured | Initial | 12 | 8 | 78 | 120 |
| | | 250 | 12 | 8 | 70 | 120 |
| | | 500 | 12 | 8 | 61 | 120 |
| | | 1000 | 12 | 8 | 73 | 120 |
| | | | | | | |
| 2 | Fresh | Initial | 12 | 8 | 85 | 150 |
| | | 250 | 12 | 8 | 79 | 150 |
| | | 500 | 12 | 8 | 70 | 150 |
| | | 1000 | 12 | 8 | 65 | 150 |
| | | | | | | |
| Comp. A | Cured | Initial | 12 | 8 | 41 | 120 |
| | | 250 | 0 | 0 | 25 | 120 |
| Comp.A* | Fresh | Initial | 0 | 0 | 0 | 120 |
| * White deposit on the tile, non stable on fresh concrete | | | | | | |

The data in Table 4 demonstrates that Examples 1 and 2 of the present invention provided excellent water repellency, oil repellency, and stain resistance to fresh cement, and that such properties were durable through at least 1000 scrubs. Application of Example 1 to the same cement fully hydrated (after cured) demonstrated comparable oil and water repellency, but lower stain resistance as shown by the Easy to Clean Factor. Comparative Example A, a cationic fluorochemical, also demonstrated lower stain resistance. This demonstrates that anionic fluorochemicals are preferred for use in the composition of the present invention. Comparative Example A, a cationic fluorochemical, was not compatible with fresh cement, and provided no surface properties.

Example 3

The compositions of Example 1 and Example 2 were subjected to Test Methods 5 and 6 to simulate weather exposure of the cement. The resulting data is in Table 5. WOM indicates Test Method 5 results and -20 indicates Test Method 6 results.

Table 5

| Example No. | Cement | Conditions | Easy to Clean Factor (%) | Deposit Rate g/m$^2$ |
|---|---|---|---|---|
| Example 1 | Fresh | Initial | 85 | 150 |
| | | 500 hr, WOM | 81 | 150 |
| | | 500 hr, -20°C | 83 | 150 |
| | | | | |
| Example 1 | Cured | Initial | 67 | 120 |
| | | 500 hr, WOM | 38 | 120 |
| | | 500 hr, -20°C | | |
| | | | | |
| Example 2 | Fresh | Initial | 77 | 150 |
| | | 500 hr, WOM | 71 | 150 |
| | | 500 hr, -20°C | 82 | 150 |

The data in Table 5 demonstrates that Example 1 on fresh cement was better than on cured cement, in terms of initial performance and durability against abrasion and accelerated weathering. Example 2 also provided excellent durability when applied on fresh cement. Examples 1 and 2 modified only slightly the surface appearance on fresh cement, but provided a glossy effect on cured cement.

Example 4

A solution was prepared by adding the following to 59.15 g of deionized water in the order listed with slight agitation: 1.75 g of TEXANOL ( a coalescent agent available from Dow Coming, Midland, MI, USA)" 0.10 g of ZONYL FSN (a nonionic fluorosurfactant available from E. I. du Pont de Nemours and Company, Wilmington, DE, USA)" 1.50 g of BAYSILONE WA (a solvent free silicone aqueous emulsion containing 1-octyltriethoxysilane and ethoxy terminated silicone and polysiloxane polymers with silsesquioxanes having a pH of 9, available from GE Bayer, Wilton, CT), 12.5 g of Fluorochemical 1, and 25.00 g of Acrylic Binder 1. The solution was applied to fresh cement, prepared by mixing water with a commercially available quick setting cement powder QUIKRETE (available from The QUIKRETE Companies, Atlanta, GA, USA), by brushing in the amount indicated in Table 6, and tested in accordance with Test Methods 1, 2, and 4. The resulting data are in Table 6.

Example 5

A solution was prepared by adding the following to 76.95 g of deionized water in the order listed with slight agitation: 0.70 g of TEXANOL, 0.10 g of ZONYL FSN, 1.00 g of BAYSILONE WA, 11.25 g of Fluorochemical 1, and 10.00 g of Acrylic Binder 1, each available as listed in Example 4. The solution was applied to the fresh cement prepared as in Example 4 by brushing in the amount indicated in Table 6, and tested in accordance with Test Methods 1, 2, and 4. The resulting data are in Table 6.

Example 6

A solution was prepared by adding the following to 63.70 g of deionized water in the order listed with slight agitation: 1.75 g of TEXANOL, 0.10 g of ZONYL FSN, 1.50 g of BAYSILONE WA, 7.95 g of Fluorochemical 3, and 25.00 g of Acrylic Binder 1, each available as listed in Example 4. The solution was applied to fresh cement prepared as in Example 4 by brushing in the amount indicated in Table 6, and tested in accordance with Test Methods 1, 2, and 4. The resulting data are in Table 6.

Example 7

A solution was prepared by adding the following to 81.03 g of deionized water in the order listed with slight agitation: 0.70 g of TEXANOL, 0.10 g of ZONYL FSN, 1.00 g of BAYSILONE WA, 7.17 g of Fluorochemical 3, and 10.00 g of Acrylic Binder 1, each available as listed in Example 4. The solution was applied to fresh cement prepared as in Example 4 by brushing in the amount indicated in Table 6, and tested in accordance with Test Methods 1, 2, and 4. The resulting data are in Table 6.

Example 8

A solution was prepared by adding the following to 66.50 g of deionized water in the order listed with slight agitation: 1.75 g of TEXANOL, 0.10 g of ZONYL FSN, 1.50 g of BAYSILONE WA, 5.15 g of Fluorochemical 2, and 25.00 g of Acrylic Binder 1, each available as listed in Example 4. The solution was applied to fresh cement prepared as in Example 4 by brushing in the amount indicated in Table 6, and tested in accordance with Test Methods 1, 2, and 4. The resulting data are in Table 6.

Example 9

A solution was prepared by adding the following to 83.56 g of deionized water in the order listed with slight agitation: 0.70 g of TEXANOL, 0.10 g of ZONYL FSN, 1.00 g of BAYSILONE WA, 4.64 g of Fluorochemical 2, and 10.00 g of Acrylic Binder 1, each available as listed in Example 4. The solution was applied to fresh cement prepared as in Example 4 by brushing in the amount indicated in Table 6, and tested in accordance with Test Methods 1, 2, and 4. The resulting data are in Table 6.

Example 10

A solution was prepared by adding the following to 60.65 g of deionized water in the order listed with slight agitation: 1.75 g of TEXANOL, 0.10 g of ZONYL FSN, 12.5 g of Fluorochemical 1, and 25.00 g of Acrylic Binder 1, each available as listed in Example 4. The solution was applied to fresh cement prepared as in Example 4 by brushing in the amount indicated in Table 6, and tested in accordance with Test Methods 1, 2, and 4. The resulting data are in Table 6.

Example 11

A solution was prepared by adding the following to 77.95 g of deionized water in the order listed with slight agitation: 0.70 g of TEXANOL, 0.10 g of ZONYL FSN, 11.25 g of Fluorochemical 1, and 10.00 g of Acrylic Binder 1, each available as listed in Example 4. The solution was applied to fresh cement prepared as in Example 4 by brushing in the amount indicated in Table 6, and tested in accordance with Test Methods 1, 2, and 4. The resulting data are in Table 6.

Comparative Example B

A solution was prepared by adding the following to 71.65 g of deionized water in the order listed with slight agitation: 1.75 g of TEXANOL, 0.10 g of ZONYL FSN, 1.50 g of BAYSILONE WA, and 25.00 g of Acrylic Binder 1, each available as listed in Example 4. The solution was applied to fresh cement prepared as in Example 4 by brushing in the amount indicated in Table 6, and tested in accordance with Test Methods 1, 2, and 4. The resulting data are in Table 6.

Comparative Example C

A solution was prepared by adding the following to 88.20 g of deionized water in the order listed with slight agitation: 0.70 g of TEXANOL, 0.10 g of ZONYL FSN, 1.00 g of BAYSILONE WA, and 10.00 g of Acrylic Binder 1, each available as listed in Example 4. The solution was applied to fresh cement prepared as in Example 4 by brushing in the amount indicated in Table 6, and tested in accordance with Test Methods 1, 2, and 4. The resulting data are in Table 6.

Comparative Example D

A solution was prepared by adding the following to 92.05 g of deionized water in the order listed with slight agitation: 7.95 g of Fluorochemical 3. The solution was applied to fresh cement prepared as in Example 4 by brushing in the amount indicated in Table 6, and tested in accordance with Test Methods 1, 2, and 4. The resulting data are in Table 6.

Comparative Example E

A solution was prepared by adding the following to 94.85 g of deionized water in the order listed with slight agitation: 5.15 g of Fluorochemical 2. The solution was applied to fresh cement prepared as in Example 4 by brushing in the amount indicated in Table 6, and tested in accordance with Test Methods 1, 2, and 4. The resulting data are in Table 6.

Comparative Example F

A solution was prepared by adding the following to 87.50 g of deionized water in the order listed with slight agitation: 12.5 g of Fluorochemical 1. The solution was applied to fresh cement prepared as in Example 4 by brushing in the amount indicated in Table 6, and tested in accordance with Test Methods 1, 2, and 4. The resulting data are in Table 6.

Table 6

| Example | ECF* at 1 hour | Oil Repellency | Water Repellency |
|---|---|---|---|
| 4 | 75 | 6 | 5 |
| 5 | 53 | 5 | 5 |
| 6 | 93 | 5 | 5 |
| 7 | 70 | 2 | 4 |
| 8 | 95 | 5 | 4 |
| 9 | 83 | 4 | 4 |
| 10 | 65 | 5 | 5 |
| 11 | 48 | 1 | 4 |
| Comparative B | 63 | 1 | 1 |
| Comparative C | 23 | 0 | 0 |
| Comparative D | 48 | 1 | 3 |
| Comparative E | 63 | 2 | 4 |
| Comparative F | 33 | 2 | 4 |
| * Easy Clean Factor | | | |

The data in Table 6 demonstrates that Examples 4 to 9 of the present invention, containing different fluorochemicals and tested on a different type of cement than the previous examples, provided excellent stain resistance, oil repellency and water repellency. Examples 10 and 11 did not contain the optional alkoxysilane component. The stain resistance of Example 11 was lower due to the combination of having no alkoxysilane present with a low level of coalescent agent. Comparative Examples B and C contained no fluorochemical and the oil repellency and water repellency were decreased, with reduced stain resistance for Comparative Example C. Comparative Examples D, E and F represented the fluorochemical alone with no acrylic binder and no coalescent agent present. These showed poor oil repellency, and for Comparative Example F this was combined with poor stain resistance.

## Claims

**1.** A composition comprising an anionic polyfluoro organic compound, an acrylic binder and a coalescent agent, wherein the polyfluoro organic compound is (i) prepared by contacting: (1) at least one polyisocyanate, (2) at least one fluorocarbon alcohol, fluorocarbon thiol, or fluorocarbon amine, (3) at least one straight or branched chain alcohol, amine or thiol, (4) at least one alcohol containing a sulfonic acid group or its salt, and then (5) optionally with at least one linking agent, or wherein the polyfluoro organic compound is (ii)

1) a mixture of mono (perfluoroalkyl) phosphate and bis(perfluoroalkyl) phosphate of Formula 1A,

$$[R_f\text{-}(O)_j]_x\text{-}P(O)\text{-}(O^-X^+)_{(3-x)} \qquad \text{Formula 1A}$$

wherein:

$R_f$ is selected from the group consisting of

$F(CF_2CF_2)_d(CH_2)_a$-,

$F(CF_2CF_2)_dCH_2CH_2(OCH_2CH_2)_b$-,

$F(CF_2CF_2)_d$-,

$F(CF_2CF_2)_dCH{=}CH(CH_2)_c$-, and

$C_8F_{17}SO_2N(R_5)CH_2CH_2$-;

a is from 2 to 10,
b is from 3 to 20,
c is from 2 to 20,
d is 1 to 8, or a mixture thereof,
$R_5$ is H or an aliphatic group containing 1 to 4 carbon atoms,
x is from 1 to 2,
j is 1 or 0, or a mixture thereof, and
X is hydrogen or M, and
M is an ammonium ion, an alkali metal ion, or an alkanolammonium ion, or

2) a phosphate of the structure of Formula IB

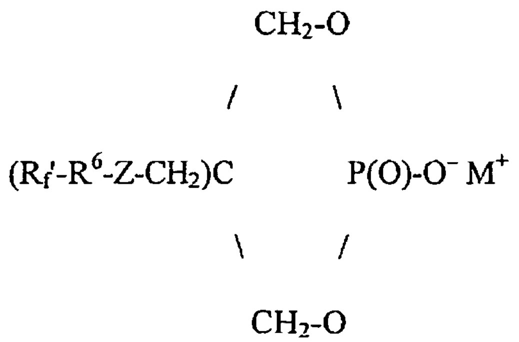

Formula 1B

wherein

$R_f'$ is a fluoroaliphatic group having a linear or branched perfluorocarbon chain having from 2 to 20 carbon atoms,
$R^6$ is an alkylene group having from 1 to 8 carbon atoms,
Z is -O-, -S-, or -NH-, and
M is as defined above in Formula IA, or

wherein the polyfluoro organic compound is (iii) a polymer having randomly distributed repeating units depicted in Formula 2

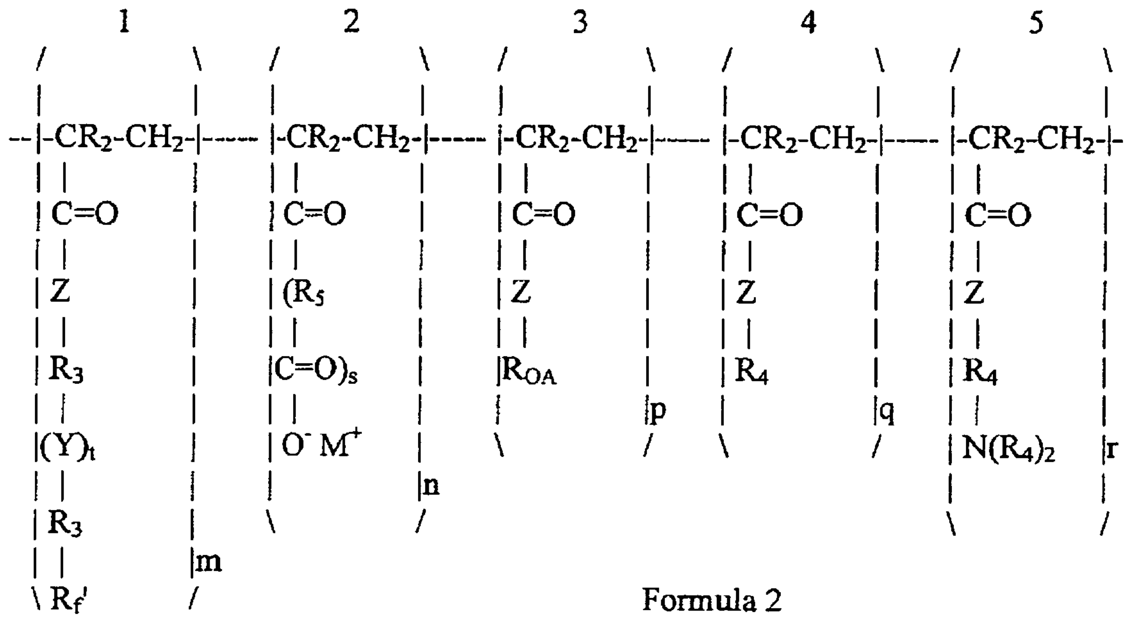

Formula 2

wherein

each $R_2$ is independently hydrogen or an aliphatic group having from 1 to 4 carbon atoms,
each $R_3$ is independently an alkylene group having from 1 to 8 carbon atoms,
each $R_4$ is independently an aliphatic group having from 1 to 20 carbon atoms,
each $R_5$ is independently a short chain alkylene group having from 1 to 4 carbon atoms,
$R_f'$ is a fluoroaliphatic group having a linear or branched perfluorocarbon chain having from 2 to 20 carbon atoms,
$R_{OA}$ is a group of the formula

$$-(C_2H_4O)_e(C_3H_6O)_g(C_4H_8O)_hR_1$$

wherein

$R_1$ is hydrogen or alkyl having 1 to 4 carbon atoms,
e is 0 to 20, and g and h are each individually zero or a positive integer, provided that the value of (e + g + h) is equal to or greater than 1,
each Z is independently -O-, -S-, or -NH-,
Y is $-N(R)SO_2-$ wherein R is H or an aliphatic group containing 1 to about 4 carbon atoms,
M is an ammonium ion, an alkali metal ion or an alkanolammonium ion,
s and t are each independently 0 or 1, and
m, n, p, q, and r are each integers such that m and n are each independently at least 1 and p, q, and r are each independently zero or a positive integer, or

wherein the polyfluoro organic compound is (iv) a fluoropolymer having interpolymerized units derived from A) polyfluoro acrylic monomers, B) non-fluorinated monomers, and optionally C) co-monomers, wherein

A) the polyfluoro acrylic monomers A are of formula (3A), (4A), or (5A) below

$$RF(CH_2)_p-SO_2N(R_1)-(CH_2)_q-OC(O)-C(R_2)-CH_2 \quad (3A)$$

$$RF-SO_2N(R_1)-(CH_2)_q-OC(O)-C(R_2)=CH_2 \quad (4A)$$

$$RF(CH_2)_p-OC(O)-C(R_2)=CH_2 \quad (5A)$$

wherein

$R_F$ is a perfluorinated radical with a linear or branched chain with 4 to 16 carbon atoms,
p and q are each independently integers ranging from 1 to 4,
$R_1$ is a linear or branched alkyl radical with 1 to 4 carbon atoms, and
$R_2$ is an hydrogen or a methyl;

B) the non-fluorinated monomer B) is an alkyl acrylate, alkyl methacrylate, glycol acrylate, glycol methacrylate, vinyl chloride, vinylidene chloride or vinyl acetate; and
C) optional co-monomer C is N,N dimethylaminoethyl or N, tert-butylaminoethyl acrylate or methacrylate, acrylic acid, methacrylic acid, and an acrylate or methacrylate monomer containing a sulfonic acid group or hydroxide group.

**2.** The composition of claim 1 wherein the acrylic binder comprises a polymer of an acrylate, methacrylate, or a mixture thereof.

**3.** The composition of claim 1 wherein the coalescent agent is selected from the group consisting a of glycol ether, ester alcohol, phosphate ester, aromatic ester, and mixtures thereof.

**4.** The composition of claim 1 further comprising a alkoxysilane.

**5.** The composition of claim 1 further comprising an emulsion of an organosilane and a organosilicon wherein

(a) the organosilane compounds are $C_1$ to $C_{20}$ hydrocarbon-$C_1$ to $C_6$ alkoxysilanes, or branched organopolysiloxanes containing $C_1$ to $C_4$ alkoxy groups; and
(b) the organosilicon compounds are $C_1$ to $C_6$ alkoxysilanes containing aminoalkyl groups, or branched organosiloxanes containing aminoalkyl groups.

**6.** The composition of claim 1 further comprising a biocide, UV absorber, light stabilizer, or wetting agent.

**7.** A method of providing durable stain resistance, cleanability, water repellency, and oil repellency to cement comprising contacting cement that is less than fully hydrated with a composition of any of claims 1 to 6.

**8.** The method of claim 7 wherein the contacting is by mixing with the cement, or by spraying, brushing, or applying with a roller or applicator to the surface of the cement.

**9.** Use of a composition of claim 1 for treating cement.

**Patentansprüche**

**1.** Zusammensetzung umfassend eine anionische organische Polyfluorverbindung, ein Acrylbindemittel und ein koaleszierendes Mittel, wobei die organische Polyfluorverbindung (i) durch Kontaktieren hergestellt wird von: (1) mindestens einem Polyisocyanat, (2) mindestens einem Fluorkohlenstoffalkohol, Fluorkohlenstoffthiol oder Fluorkohlenstoffamin, (3) mindestens einem gerad- oder verzweigtkettigen Alkohol, Amin oder Thiol, (4) mindestens einem Alkohol, der eine Sulfonsäuregruppe oder ihr Salz enthält, und dann (5) wahlweise mit mindestens einem Verknüpfungsmittel oder wobei die organische Polyfluorverbindung (ii) Folgendes ist

1) eine Mischung von Mono(perfluoralkyl)phosphat und Bis(perfluoralkyl)phosphat der Formel 1 A,

$$[R_f\text{-}(O)_j]_x\text{-}P(O)\text{-}(O^-X^+)_{(3-x)} \qquad \text{Formal 1A}$$

wobei

$R_f$ aus der Gruppe ausgewählt ist bestehend aus
$F(CF_2CF_2)_d(CH_2)_a$-,
$F(CF_2CF_2)_aCH_2CH_2(OCH_2CH_2)_b$-,
$F(CF_2CF_2)_d$-,
$F(CF_2CF_2)_dCH{=}CH(CH_2)_c$- und
$C_8F_{17}SO_2N(R_5)CH_2CH_2$-;

a 2 bis 10 beträgt,
b 3 bis 20 beträgt,
c 2 bis 20 beträgt,
d 1 bis 8 beträgt oder eine Mischung davon ist,
$R_5$ H oder eine aliphatische Gruppe ist, die 1 bis 4 Kohlenstoffatome enthält,
x 1 bis 2 beträgt,
j 1 oder 0 beträgt oder eine Mischung davon ist oder
X Wasserstoff oder M ist und
M ein Ammoniumion, ein Alkylimetallion oder ein Alkanolammoniumion ist oder

2) ein Phosphat der Struktur der Formel IB

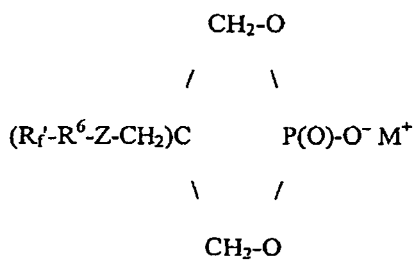

Formel 1B

wobei

$R_f$' eine fluoraliphatische Gruppe ist, die eine lineare oder verzweigte Perfluorkohlenstoffkette aufweist, die 2 bis 20 Kohlenstoffatome aufweist,
$R^6$ eine Alkylengruppe ist, die 1 bis 8 Kohlenstoffatome aufweist,
Z -O-, -S- oder NH- ist und
M die oben in Formel IA angegebene Definition aufweist oder

wobei die organische Polyfluorverbindung (iii) ein Polymer ist, das willkürlich verteilte Wiederholungseinheiten aufweist, die in der Formel 2 dargestellt sind

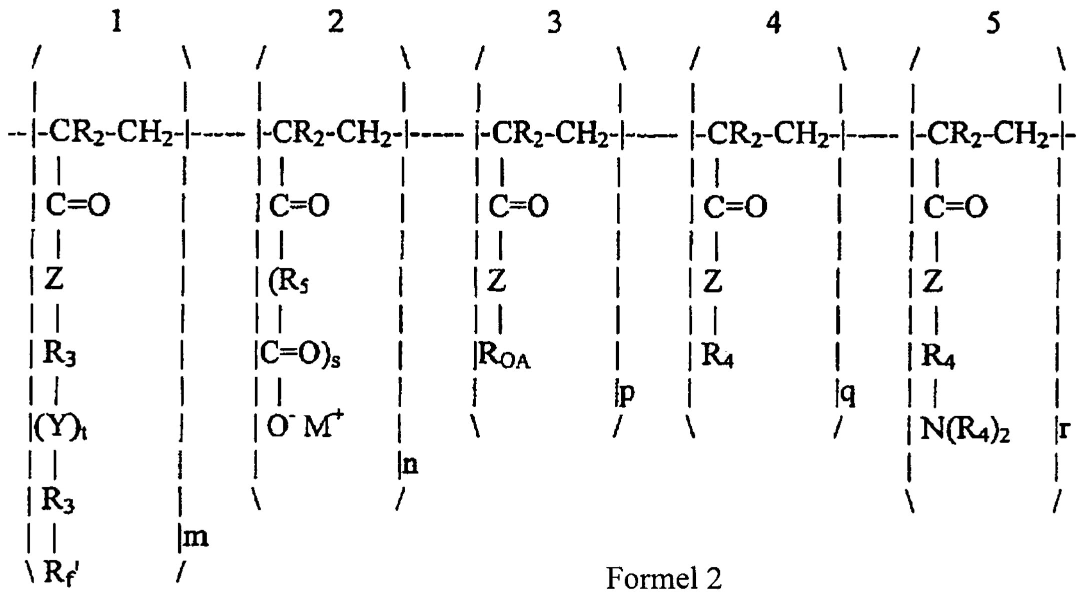

Formel 2

wobei

jedes $R_2$ unabhängig Wasserstoff oder eine aliphatische Gruppe ist, die 1 bis 4 Kohlenstoffatome aufweist,

jedes $R_3$ unabhängig eine Alkylengruppe ist, die 1 bis 8 Kohlenstoffatome aufweist,
jedes $R_4$ unabhängig eine aliphatische Gruppe ist, die 1 bis 20 Kohlenstoffatome aufweist,
jedes $R_5$ unabhängig eine kurzkettige Alkylengruppe ist, die 1 bis 4 Kohlenstoffatome aufweist,
$R_f$' eine fluoraliphatische Gruppe ist, die eine lineare oder verzweigte Perfluorkohlenstoffkette aufweist, die 2 bis 20 Kohlenstoffatome aufweist,
$R_{OA}$ eine Gruppe der Formel

$$-(C_2H_4O)_e(C_3H_6O)_g(C_4H_8O)_hR_1$$

wobei

$R_1$ Wasserstoff oder Alkyl ist, das 1 bis 4 Kohlenstoffatome aufweist,
e 0 bis 20 beträgt und g und h jeweils einzeln null betragen oder eine positive ganze Zahl sind, vorausgesetzt, dass der Wert von (e + g + h) gleich oder höher als 1 ist,
jedes Z unabhängig -O-, -S- oder -NH- ist,
Y $-N(R)SO_2-$ ist, wobei R H oder eine aliphatische Gruppe ist, die 1 bis etwa 4 Kohlenstoffatome enthält,
M ein Ammoniumion, ein Alkalimetallion oder ein Alkanolammoniumion ist,
s und t jeweils unabhängig 0 oder 1 betragen und
m, n, p, q und r jeweils ganze Zahlen sind derart, dass m und n jeweils unabhängig mindestens 1 betragen und p, q und r jeweils unabhängig null betragen oder eine positive ganze Zahl sind, oder wobei die organische Polyfluorverbindung (iv) ein Fluorpolymer ist, das interpolymerisierte Einheiten aufweist, die von A) Polyfluoracrylmonomeren, B) nichtfluorierten Monomeren abgeleitet sind und wahlweise C) Comonomere sind, wobei

A) die Polyfluoracrylmonomere A die Formel (3A), (4A) oder (5A) unten aufweisen

$$RF(CH_2)_p\text{-}SO_2N(R_1)\text{-}(CH_2)_q\text{-}OC(O)\text{-}C(R_2)\text{=}CH_2 \quad (3A)$$

$$RF\text{-}SO_2N(R_1)\text{-}(CH_2)_q\text{-}OC(O)\text{-}C(R_2)\text{=}CH_2 \quad (4A)$$

$$RF(CH_2)_p\text{-}OC(O)\text{-}C(R_2)\text{=}CH_2 \quad (5A)$$

wobei

$R_F$ ein perfluoriertes Radikal mit einer linearen oder verzweigten Kette mit 4 bis 16 Kohlenstoffatomen ist,
p und q jeweils unabhängig ganze Zahlen im Bereich von 1 bis 4 sind,
$R_1$ ein lineares oder verzweigtes Alkylradikal mit 1 bis 4 Kohlenstoffatomen ist und
$R_2$ ein Wasserstoff oder ein Methyl ist;

B) das nichtfluorierte Monomer B) ein Alkylacrylat, Alkylmethacrylat, Glykolacrylat, Glykolmethacrylat, Vinylchlorid, Vinylidenchlorid oder Vinylacetat ist; und
C) wahlweise das Comonomer C N,N-Dimethylaminoethyl oder N, tert.-Butylaminoethylacrylat oder -methacrylat, Acrylsäure, Methacrylsäure und ein Acrylat - oder Methacrylatmonomer ist, das eine Sulfonsäuregruppe oder Hydroxidgruppe aufweist.

**2.** Zusammensetzung nach Anspruch 1, wobei das Acrylbindemittel ein Polymer eines Acrylats, Methacrylats oder eine Mischung davon umfasst.

**3.** Zusammensetzung nach Anspruch 1, wobei das koaleszierende Mittel aus der Gruppe ausgewählt ist bestehend aus einem Glykolether, Esteralkohol, Phosphatester, aromatischen Ester und Mischungen davon.

**4.** Zusammensetzung nach Anspruch 1, des Weiteren ein Alkoxysilan umfassend.

**5.** Zusammensetzung nach Anspruch 1, des Weiteren eine Emulsion eines Organosilans und eines Organosiliciums umfassend, wobei

(a) die Organosilanverbindungen $C_1$- bis $C_{20}$-Kohlenwasserstoff $C_1$- bis $C_6$-Alkoxysilane oder verzweigte Or-

ganopolysiloxane, die $C_1$- bis $C_4$-Alkoxygruppen enthalten, sind; und
(b) die Organosiliciumverbindungen $C_1$-bis $C_6$-Alkoxysilane, die Aminoalkylgruppen enthalten, oder verzweigte Organosiloxane, die Aminoalkylgruppen enthalten, sind.

**6.** Zusammensetzung nach Anspruch 1, des Weiteren ein Biozid, UV-Absorptionsmittel, einen Lichtstabilisator oder ein Benetzungsmittel umfassend.

**7.** Verfahren zum Bereitstellen von dauerhafter Fleckenfestigkeit, Reinigungsfähigkeit, Wasserabweisungsvermögen und Ölabweisungsvermögen bei Zement, umfassend das Kontaktieren von Zement, der weniger als vollständig hydratisiert ist, mit einer Zusammensetzung nach einem der Ansprüche 1 bis 6.

**8.** Verfahren nach Anspruch 7, wobei das Kontaktieren durch Mischen mit Zement oder durch Bespritzen, Pinselauftrag oder Aufbringen mit einer Walze oder einem Applikator auf die Oberfläche des Zements erfolgt.

**9.** Verwendung einer Zusammensetzung nach Anspruch 1 zum Behandeln von Zement.

## Revendications

**1.** Composition comprenant un composé organique polyfluoré anionique, un liant acrylique et un agent coalescent, où le composé organique polyfluoré (i) est préparé par mise en contact: (1) d'au moins un polyisocyanate, (2) d'au moins un alcool fluorocarboné, un thiol fluorocarboné ou une amine fluorocarbonée, (3) d'au moins un alcool, une amine ou un thiol à chaîne linéaire ou ramifiée, (4) d'au moins un alcool contenant un groupe acide sulfonique ou son sel, et ensuite (5) éventuellement avec au moins un agent de liaison, ou dans laquelle le composé organique polyfluoré est (ii)

1) un mélange de phosphate de mono(perfluoroalkyle) et de phosphate de bis(perfluoroalkyle) de formule 1A,

$$[R_f\text{-}(O)_j]_x\text{-}P(O)\text{-}(O^-X^+)_{(3-x)} \qquad \text{Formule 1A}$$

dans laquelle:

$R_f$ est choisi parmi le groupe constitué de
$F(CF_2CF_2)_d(CH_2)_a$-,
$F(CF_2CF_2)_dCH_2CH_2(OCH_2CH_2)_b$-,
$F(CF_2CF_2)_d$-,
$F(CF_2CF_2)_dCH{=}CH(CH_2)_c$-, et
$C_8F_{17}SO_2N(R_5)CH_2CH_2$-;
a a une valeur de 2 à 10,
b a une valeur de 3 à 20,
c a une valeur de 2 à 20,
d a une valeur de 1 à 8, ou un mélange de ceux-ci,
$R_5$ est H ou un groupe aliphatique contenant 1 à 4 atome(s) de carbone,
x a une valeur de 1 à 2,
j a une valeur de 1 ou 0, ou leur mélange, et
X est un atome d'hydrogène ou M, et
M est un ion ammonium, un ion de métal alcalin, ou
un ion alcanolammonium, ou

2) un phosphate de la structure de formule IB

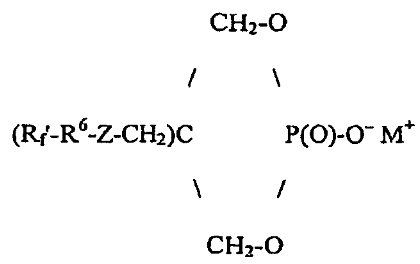

Formule 1B

dans laquelle

$R_f$' est un groupe fluoroaliphatique ayant une chaîne perfluorocarbonée linéaire ou ramifiée ayant de 2 à 20 atomes de carbone,
$R^6$ est un groupe alcylène ayant de 1 à 8 atome(s) de carbone,
Z est -O-, -S-, ou -NH-, et
M est tel que défini ci-dessus dans la formule 1A, ou

dans laquelle le composé organique polyfluoré est (iii) un polymère ayant des motifs de répétition distribués de manière aléatoire illustrés en formule 2

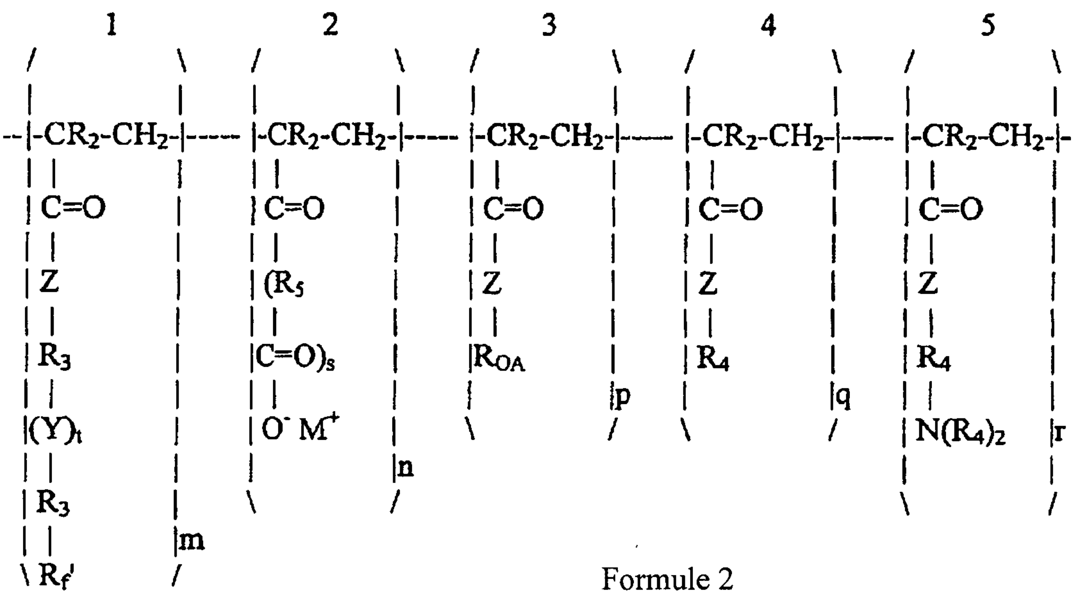

Formule 2

dans lesquelles

chaque $R_2$ est indépendamment un atome d'hydrogène ou un groupe aliphatique ayant de 1 à 4 atome(s) de carbone,
chaque $R_3$ est indépendamment un groupe alcylène ayant de 1 à 8 atome(s) de carbone,
chaque $R_4$ est indépendamment un groupe aliphatique ayant de 1 à 20 atome(s) de carbone,
chaque $R_5$ est indépendamment un groupe alcylène à courte chaîne ayant de 1 à 4 atome(s) de carbone,
$R_f$' est un groupe fluoroaliphatique ayant une chaîne perfluorocarbonée linéaire ou ramifiée ayant de 2 à 20 atomes de carbone,
ROA est un groupe de formule

$$-(C_2H_4O)_e(C_3H_6O)_g(C_4H_8O)_hR_1$$

dans laquelle

$R_1$ est un atome d'hydrogène ou un groupe alkyle ayant de 1 à 4 atome(s) de carbone,
e a la valeur de 0 à 20, et g et h sont chacun individuellement zéro ou un nombre entier positif, à condition que la valeur de (e + g + h) soit égale ou supérieure à 1,
chaque Z est indépendamment -O-, -S-, ou -NH-,
Y est $-N(R)SO_2-$ dans laquelle R est un atome H ou un groupe aliphatique contenant 1 à environ 4 atome(s) de carbone,
M est un ion ammonium, un ion de métal alcalin ou un ion alcanolammonium,
s et t ont chacun indépendamment la valeur de 0 ou 1, et
m, n, p, q et r sont chacun des nombres entiers tels que m et n ont chacun indépendamment la valeur de 1 et p, q et r ont chacun indépendamment la valeur de zéro ou un nombre entier positif, ou

dans lesquelles le composé organique polyfluoré est (iv) un polymère fluoré ayant des motifs interpolymérisés de A) monomères acryliques polyfluorés, B) monomères non fluorés, et éventuellement C) de comonomères, dans lesquels

A) les monomères acryliques polyfluorés A sont de formule (3A), (4A), ou (5A) ci-dessous

$$RF(CH_2)_p\text{-}SO_2N(R_1)\text{-}(CH_2)_q\text{-}OC(O)\text{-}C(R_2){=}CH_2 \quad (3A)$$

$$RF\text{-}SO_2N(R_1)\text{-}(CH_2)_q\text{-}OC(O)\text{-}C(R_2){=}CH_2 \quad (4A)$$

$$RF(CH_2)_p\text{-}OC(O)\text{-}C(R_2){=}CH_2 \quad (5A)$$

dans lesquelles

$R_F$ est un radical perfluoré avec une chaîne linéaire ou ramifiée ayant 4 à 16 atomes de carbone,
p et q sont chacun indépendamment des nombres entiers s'étendant d'une valeur de 1 à 4,
$R_1$ est un radical alkyle linéaire ou ramifié avec 1 à 4 atome(s) de carbone, et
$R_2$ est un atome d'hydrogène ou un groupe méthyle;

B) le monomère non fluoré B) est un acrylate d'alkyle, un méthacrylate d'alkyle, un acrylate de glycol, un méthacrylate de glycol, un chlorure de vinyle, un chlorure de vinylidène ou un acétate de vinyle; et
C) le comonomère C éventuel est le N,N diméthylaminoéthyle ou l'acrylate ou le méthacrylate de N, tert-butylaminoéthyle, l'acide acrylique, l'acide méthacrylique, et un monomère acrylate ou méthacrylate contenant un groupe acide sulfonique ou un groupe hydroxyde.

**2.** Composition selon la revendication 1, dans laquelle le liant acrylique comprend un polymère d'un acrylate, d'un méthacrylate, ou d'un mélange de ceux-ci.

**3.** Composition selon la revendication 1, dans laquelle l'agent coalescent est sélectionné parmi le groupe constitué d'un éther de glycol, d'un alcool d'ester, d'un ester de phosphate, d'un ester aromatique, et de leurs mélanges.

**4.** Composition selon la revendication 1, comprenant en outre un alcoxysilane.

**5.** Composition selon la revendication 1, comprenant en outre une émulsion d'un organosilane et d'un organosilicium dans laquelle

(a) les composés d'organosilane sont des hydrocarbones en $C_1$ à $C_{20}$-alcoxysilanes en $C_1$ à $C_6$, ou des groupes alcoxy en $C_1$ à $C_4$ contenant des organopolysiloxanes ramifiés; et
(b) les composés d'organosilicium sont des groupes aminoalkyle contenant des alcoxysilanes en $C_1$ à $C_6$, ou des groupes aminoalkyle contenant des organosiloxanes ramifiés.

**6.** Composition selon la revendication 1, comprenant en outre un biocide, un agent d'absorption du rayonnement UV, un agent de stabilisation de la lumière ou un agent mouillant.

**7.** Procédé de fourniture d'une résistance durable aux taches, l'aptitude au nettoyage, l'hydrofugation, et l'oléofugation au ciment comprenant la mise en contact du ciment qui est alors pleinement hydraté avec une composition selon l'une quelconque des revendications 1 à 6.

**8.** Procédé selon la revendication 7, dans lequel la mise en contact s'effectue par mélange avec le ciment, ou par pulvérisation, brossage ou application d'un cylindre ou d'un applicateur à la surface du ciment.

**9.** Utilisation d'une composition selon la revendication 1 pour le traitement du ciment.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 5990212 A
- US 6646088 B
- WO 9301348 A
- US 6479612 B
- US 3083224 A
- US 6271289 B
- US 4145382 A, Hayashi and Kawakami
- US 4229224 A
- US 4846886 A
- US 4342796 A
- US 4753977 A
- US 5110684 A
- US 6294608 A
- US 6294608 B